# EUROPEAN PATENT APPLICATION

(11) **EP 1 509 037 A2**
(43) Date of publication of application: **23.02.2005**
(21) Application number: 04254929.5
(22) Date of filing: 17.08.2004
(51) Int. Cl.: H04N 1/60

(54) **Colour proof preparing system, image output device and colour proof preparing method**

(30) Priority: 18.08.2003 JP 2003294060
(71) Applicant: Konica Minolta Medical & Graphic Inc., Tokyo 163-0512 (JP)
(72) Inventor: Sugita, Tsuyoshi Konica Minolta Med.& Graphic Inc., Hachioji-shi Tokyo 192-8505 (JP)
(74) Representative: Rees, Alexander Ellison

(57) **Abstract**

A color proof preparing system which includes a control device that transmits image data corresponding to images to be subjected to color proofing, and an image output device that receives the image data and forms the image based on the image data on a recording sheet to output the recording sheet on which the image is formed, as a color proof. Said image output device comprises a detection means that detects the state of the image, a correcting means that conducts correction processing to correct the state of the image to be formed, based on the aforesaid detected state of the image, a recording means that records the contents of the correction processing and the date and hour on which the correction processing was conducted, a historical information storage means that stores the contents of the recorded correction processing and the date and hour on which the correction processing was conducted, and a historical information adding means that conducts processing to add the stored historical information to the image formed on a recording sheet.

## Description

### BACKGROUND OF THE INVENTION

The present invention relates to a color proof preparing system composed of a control device that transmits image data corresponding to images to be subjected to color proofing and of an image output device that receives the image data and forms an image based on the image data on a recording sheet, to output the recording sheet on which the image is formed, as a color proof, the image output device used in the color proof preparing system, and to a color proof preparing method, and in particular, to one that adds historical information of correction processing that corrects an image forming position and an exposure amount in the case of forming the image to images formed on a recording sheet.

Due to the spread of DTP (Desk Top Publishing) in the printing field in recent years, there has been generalized an operation to edit an image inputted from a scanner on computer software and to conduct page-imposition, and editing on a full-digital basis is not strange.

In the process of this kind, there are conducted image setter output to output directly the page-imposed image data on a plate-making film, CTP (Computer to Plate) output for conducting image recording directly on the printing plate and further CTC (Computer to Cylinder) to conduct image recording directly on the printing plate wound round a cylinder of a printing machine, for aiming further efficiency.

In this case, in conducting film output and printing plate output once only for confirmation of proofing, and in conducting printing proofing and proofing by other proofing materials, there are problems that wastes of films and printing plates are increased and extra operations are increased.

Under the aforesaid background, there is a demand for the system that is called DDCP (Direct Digital Color Proof) and conducts image output directly, in the process wherein full-digital image making and editing are conducted by a computer.

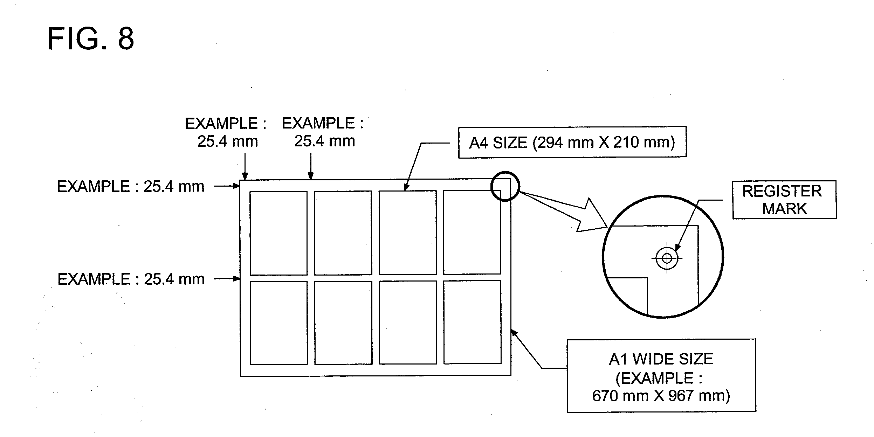

The DDCP of this kind is one having an object wherein, before page-imposed image data (in the figure, 8 images each being in A4 size (297 x 210 mm) are pasted up and show image data in A1 wide size (670 x 967 mm) to which a register mark area is added) are recorded on a plate-making film by an image setter, final printing operations to make a printing plate directly through CTP are conducted, and before image recording is conducted directly on a printing plate wound round a cylinder of a printing machine through CTC, as shown in Fig. 8, DCP (Digital Color Proof) representing a color sample (color proof) reproducing those mentioned above is prepared, to confirm patterns, image tones and compositions characters.

Further, on the DCP making system of this kind, a small-sized output of image data (image data before page-imposition) on a single page is conducted by a color laser printer before making DCP, and patterns, image tones and compositions characters of the simply-available color proof representing outputted objects are confirmed.

Namely, in the printing plate-making process, the simply-available color proof and DCP for confirming patterns, image tones and compositions characters for outputted objects are made and its proofing is conducted generally, before conducting final printing operations.

Recently, it has become possible to conduct high grade color output at high speed inexpensively, following upon an improvement of functions of a color laser printer, which results in increasing demands to use such color laser printer for application of making DCP. However, image data for making DCP are those to output large-sized images, as stated above, and therefore, in the color laser printer, it is split to be outputted.

As a color laser printer of this kind, there are given a color laser printer of an electrophotographic type disclosed in TOKKAIHEI No5 48857, and a multifunctional machine having functions as a scanner, a copying machine and a facsimile machine together.

Incidentally, for correcting the dispersion of outputted image quality caused by aged deterioration or environmental changes, some of the color laser printers of this type are provided with functions to conduct correction processing such as registration adjustment or gamma correction described, for example, in TOKKAI Nos. 2001-290331 and 2002-116586. This registration adjustment means a line-up of leading edges of an image (latent image) and a transfer sheet, and in its specific way, register marks representing indexes for line-up corresponding to each color constituting the image, for example, are outputted at four corners of the transfer sheet, and an output position for each color is adjusted based on an amount of positional deviation of each register mark. Further, this gamma correction means adjustment of a gamma value representing a numerical value (numerical value indicating relationship between laser output and density of color outputted) expressing response characteristics of image gradation, and in concrete terms, an amount of exposure on an electrophotographic photoreceptor (laser output) and image forming conditions such as development voltage are adjusted for making a gamma value to be a prescribed value (for obtaining prescribed gradation characteristics). Incidentally, this gamma value is a characteristic curve expressing relationship between laser output and density of color outputted, namely, it is a value determined by the gradation curve, while, the gamma correction is to adjust a position and an inclination of the gradation curve.

Deterioration of outputted image quality such as deterioration of resolution and sharpness caused by deviation of output position for each color and out of color registration caused by color balance deterioration resulted from deviation of gradation characteristics of each color becomes conspicuous as the number of prints increases. When using this color laser printer as a means to output DCP in the color proof process of printing plate-making business, it becomes very important to conduct such correction processing at appropriate timing. However, in the present condition, the correction processing of this kind is conducted, when an operator confirms actual quality of outputted image and recognizes the deterioration, or when a certain number of days have passed.

However, in the case of actual outputted objects, namely, in the case of confirmation of quality deterioration of DCP by an operator, there is sometimes an occasion where the operator cannot recognize quality deterioration (for example, an occasion where the gradation curve of cyan is shifted and cyan is not used in the image, or, an occasion where the image does not have a light highlight portion that is remarkably influenced by deterioration of color balance), depending on contents of the image outputted on the outputted object, and in the case of the control by the number of days, there is sometimes an occasion where correction processing cannot be conducted at the appropriate times because of an error or a mistake of the operator (such as an occasion where the date and hour for the preceding confirmation of quality deterioration are not recorded), resulting in the situation wherein outputting has been conducted under the deteriorated quality.

### SUMMARY OF THE INVENTION

According to one embodiment of the present invention, a color proof preparing system is provided, the system includes a control device that transmits image data corresponding to images to be subjected to color proofing, and an image output device that receives the image data and forms the image based on the image data on a recording sheet to output the recording sheet on which the image is formed, as a color proof. Said image output device comprises a detection means that detects the state of the image, a correcting means that conducts correction processing to correct the state of the image to be formed, based on the aforesaid detected state of the image, a recording means that records the contents of the correction processing and the date and hour on which the correction processing was conducted, a hysteretic information storage means that stores the contents of the recorded correction processing and the date and hour on which the correction processing was conducted, and a hysteretic information adding means that conducts processing to add the stored hysteretic information to the image formed on a recording sheet.

According to second embodiment of the present invention, a color proof preparing system is provided, the system includes a control device that transmits image data corresponding to images to be subjected to color proofing and an image output device that receives the image data and forms the image based on the image data on a recording sheet to output the recording sheet on which the image is formed, as a color proof. Said image output device comprises a detection means that detects the state of the image, a correcting means that conducts correction processing to correct the state of the image to be formed, based on the aforesaid detected state of the image, a recording means that records the contents of the correction processing and the number of recording sheets outputted after the correction processing was conducted, a hysteretic information storage means that stores the contents of the recorded correction processing and the number of recording sheets outputted after the correction processing was conducted, and a hysteretic information adding means that conducts processing to add the recorded hysteretic information to the image formed on the recording sheet.

According to third embodiment of the present invention, a color proof preparing system is provided. The system includes a control device that transmits image data corresponding to images to be subjected to color proofing, and an image output device that receives the image data and forms the image based on the image data on a recording sheet to output the recording sheet on which the image is formed, as a color proof. Said image output device comprises a detection means that detects the state of the image, a correcting means that conducts correction processing to correct the state of the image to be formed, based on the aforesaid detected state of the image, and a recording means that records the contents of the correction processing and the date and hour on which the correction processing was conducted, and said control device comprises a hysteretic information adding means that conducts processing to add the hysteretic information to images formed on a recording sheet by receiving the transmitted hysteretic information and by adding the hysteretic information to the image data, and transmits the processed image data as the aforesaid image data.

According to forth embodiment of the present invention, a color proof preparing system is provided. The system includes a control device that transmits image data corresponding to images to be subjected to color proofing, and an image output device that receives the image data and forms the image based on the image data on a recording sheet to output the recording sheet on which the image is formed, as a color proof. Said image output device comprises a detection means that detects the state of the image, a correcting means that conducts correction processing to correct the state of the image to be formed, based on the aforesaid detected state of the image, and a recording means that records the contents of the correction processing and the number of recording sheets outputted after the correction processing was conducted and transmits the recorded contents of the correction processing and the number of recording sheets outputted after the correction processing was conducted as the hysteretic information, and said control device comprises a hysteretic information adding means that conducts processing to add the hysteretic information to images formed on a recording sheet by receiving the transmitted hysteretic information and by adding the hysteretic information to the image data, and transmits the processed image data as the aforesaid image data.

According to fifth embodiment of the present invention, an image output device is provided. The device receives image data corresponding to the image to be subjected to color proofing to form an image based on the image data on a recording sheet, and outputs the recording sheet on which the aforesaid image has been formed as a color proof, and comprises a detection means that detects the state of the image, a correcting means that conducts correction processing to correct the state of the image formed based on the detected state of image, a recording means that records contents of the correction processing and the date and hour on which the correction processing was conducted, a hysteretic information storage means that stores, as the hysteretic information, the recorded contents of the correction processing and the date and hour on which the correction processing was conducted, and a hysteretic information adding means that conducts processing to add the stored hysteretic information to the image formed on the recording sheet.

According to sixth embodiment of the present invention, an image output device is provided, the device receives image data corresponding to the image to be subjected to color proofing to form an image based on the image data on a recording sheet, and outputs the recording sheet on which the aforesaid image has been formed as a color proof, and comprises a detection means that detects the state of the image, a correcting means that conducts correction processing to correct the state of the image formed based on the detected state of image, a recording means that records contents of the correction processing and the number of recording sheets outputted after the correction processing was conducted, a hysteretic information storage means that stores, as the hysteretic information, the recorded contents of the correction processing and the number of recording sheets outputted after the correction processing was conducted, and a hysteretic information adding means that conducts processing to add the stored hysteretic information to the image formed on the recording sheet.

According to seventh embodiment of the present invention, a color proof preparing method for forming an image based on the image data corresponding on the image to be subjected to color proofing on a recording sheet, through exposure process and for outputting the recording sheet on which the image is formed as a color proof. The method comprises a detecting step to detect the state of the image, a correcting step for conducting correction processing to correct the state of the image formed based on the detected state of the image, a recording step to record the contents of the correction processing and the date and hour on which the correction processing was conducted, a hysteretic information storing step for storing the recorded contents of the correction processing and the date and hour on which the correction processing was conducted, and a hysteretic information adding step to conduct processing for adding the stored hysteretic information to the image formed on the recording sheet.

According to eight embodiment of the present invention, a color proof preparing method for forming an image based on the image data corresponding on the image to be subjected to color proofing on a recording sheet, through exposure process and for outputting the recording sheet on which the image is formed as a color proof. The method comprises a detecting step to detect the state of the image, a correcting step for conducting correction processing to correct the state of the image formed based on the detected state of the image, a recording step to record the contents of the correction processing and the number of recording sheets outputted after the correction processing was conducted, a hysteretic information storing step for storing the recorded contents of the correction processing and the number of recording sheets outputted after the correction processing was conducted, and a hysteretic information adding step to conduct processing for adding the stored hysteretic information to the image formed on the recording sheet.

### BRIEF DESCRIPTION OF THE DRAWINGS

Fig. 1 is a structural diagram indicating the total structure in the embodiment of a color proof preparing system relating to the invention.
Fig. 2 is a flow chart indicating a flow of a series of printing plate-making operations conducted in the color proof preparing system shown in Fig. 1.
Fig. 3 is a functional block diagram showing the detailed structure of a color laser printer shown in Fig. 1.
Fig. 4 is an illustration showing an example of setting conditions for adding historical information to be established in the condition setting section of the color laser printer shown in Fig. 3.
Fig. 5 is a flow chart indicating a flow of updating and storing processing for historical information conducted in the color laser printer shown in Fig. 3.
Fig. 6 is a flow chart indicating a flow of addition outputting processing for historical information conducted in the color laser printer shown in Fig. 3.
Fig. 7 is an illustration showing an embodiment where historical information has been outputted on outputted object in addition to images at an outputting portion of the color laser printer shown in Fig. 3.
Fig. 8 is a structural diagram showing an structure of image data outputted through CTP.

### DETAILED DESCRIPTION OF THE PREFERRED EMBODIMENT

Referring to the drawings, there will be explained in detail an embodiment for the color proof preparing system, the image output device and the color proof preparing method, all relating to the invention.

### (Color proof preparing system)

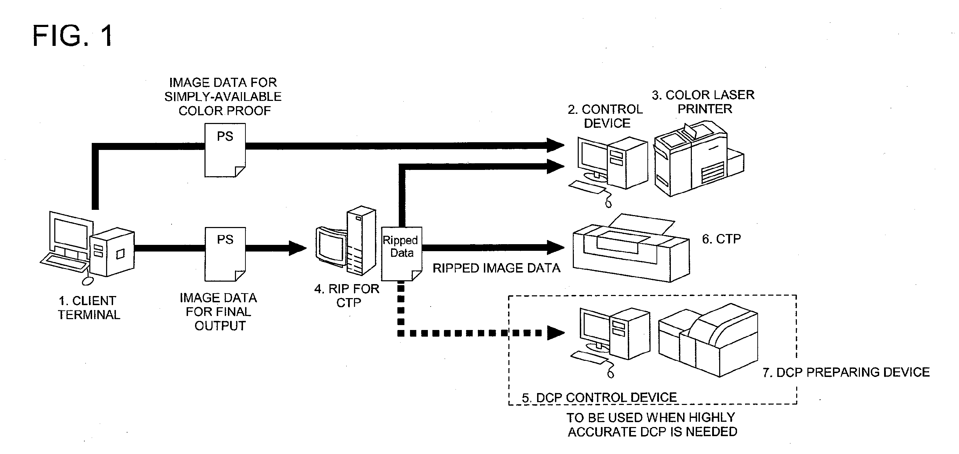

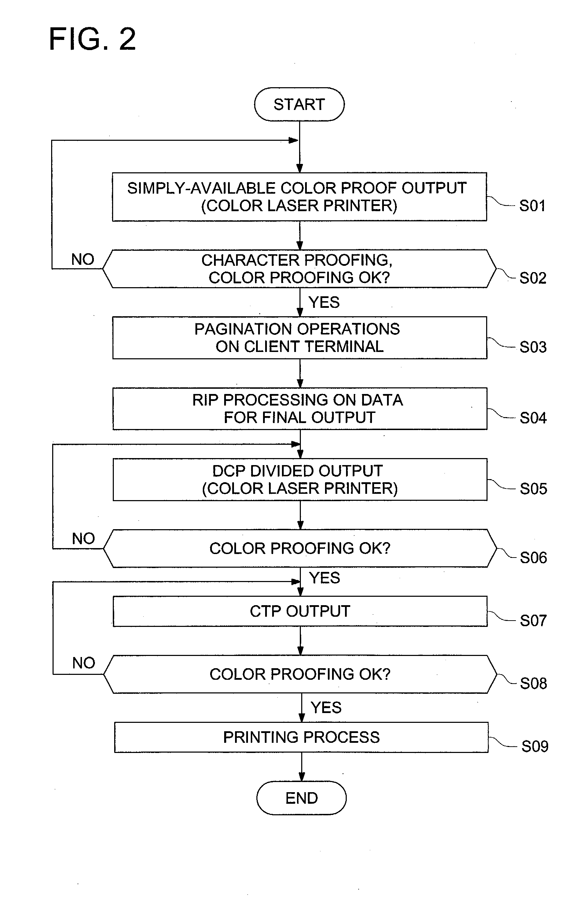

First, the system structure and rough operations of the color proof preparing system in the present embodiment will be explained along the flow of the flow chart shown in Fig. 2, while referring to Fig. 1.

### (System structure)

As shown in Fig. 1, the color proof preparing system is composed of client terminal 1 for conducting editing of image data and imposing operations; control device 2 that transmits image data for the simply-available color proof (image data on a single page before page-imposition) transmitted from the client terminal 1 and described with Post Script, for example, and image data for final output (image data having thereon imposed plural image data for simply-available color proof) transmitted from RIP 4 for CTP described later to color laser printer 3 that is an image output device and will be described later; color laser printer 3 of a charging copy type that outputs (outputs by dividing, depending on an image size) images based on image data for simply-available color proof transmitted from the control device 2 or images based on image data for final output transmitted from RIP 4 for CTP ; RIP 4 for CTP that conducts RIP processing (converting image data into bitmapped data by fitting to output resolution of CTP 6 and DCP making device 7) on image data for final output transmitted from client terminal 1 and described with Post Script, and then, transmits them to the control device 2, CTP6, or, when highly accurate DCP is needed, DCP control device 5; DCP preparing device 7 that outputs images based on image data for final output transmitted from the RIP 4 for CTP through DCP control device 5, as DCP; and of CTP6 that outputs images based on image data for final output transmitted from the RIP 4 for CTP. Each of these is connected through a network.

Incidentally, each of the client terminal 1, control device 2, RIP 4 for CTP and DCP control device 5 is one to operate as a computer terminal, and it is equipped with a computer main body, a key board and a display section, while, a program for prescribed operations is incorporated therein. Further, the client terminal 1 is equipped with an image input device, an image scanner or the like, which is necessary for obtaining image data.

Color laser printer 3 is provided with a scanner portion that reads document images and various color charts described later, and is further provided with an operation section for conducting registration adjustment to correct an image forming position and for conducting operations concerning correction processing such as gamma correction to correct an amount of exposure in the case of forming a latent image described later.

### (Schematic operations)

As is shown in Fig. 2, in the structure of this kind, image data edited in client terminal 1 is transmitted to control device 2, and the control device 2 which has received the image data transmits output information together with the image data to color laser printer 3, then, the color laser printer 3 which has received them outputs a simply-available color proof to a transfer sheet (S01). Incidentally, "simply-available color proof" mentioned here means a sample of colored finish, and it is one prepared for studying whether the design matches the intention of planning and editing or not, and for obtaining a consent of a client, by displaying finished images which are close to the final prints, as dummies of photographs and illustrations to be imposed. Namely, in this case, small-sized output on a single page is conducted, and results of operations of character proofing and color proofing are confirmed (S02).

In this case, when no problem has been confirmed by an operator (S02, Yes), page-imposing operations are conducted in the client terminal 1 (S03). Incidentally, the "page-imposing operation" mentioned here means operations to paste images such as photographs or illustrations on a printing sheet, on a basis of 16-page unit, 8-page unit or 4-page unit, depending on a size of printing sheet to be loaded in a printing machine so that numbers (a number inserted on the edge of each page so that the number of the page may be known) may be arranged in order when plate-making films are folded after final printing.

Then, image data for final output wherein imposing operations have been conducted are transmitted from the client terminal 1 to RIP 4 for CTP, and the RIP 4 for CTP which has received this information conducts RIP processing on the image data for final output. Specifically, RIP-processed image data are prepared by converting into bitmapped data by fitting to output resolution of DCP making device 7 and CTP 6 (S04). The RIP-processed image data are transmitted to control device 2 from RIP 4 for CTP, and the control device 2 that has received them transmits output information together with the image data to color laser printer 3. Then, the color laser printer 3 that has received the aforesaid data and information outputs (or outputs after dividing, depending on a size of the image) images based on the image data for final output to a transfer sheet (S05). In the case outputting after dividing is conducted, an operator prepares DCP finally, by pasting these outputted objects together. Further, when highly accurate DCP is needed, the RIP 4 for CTP transmits RIP-processed image data to DCP control device 5, then, the DCP control device 5 that has received the image data conducts output control of DCP preparing device 7, and the DCP preparing device 7 outputs images based on the image data for final output (S05). Namely, in this case, images imposed are outputted as a sheet of DCP.

Then, when color proofing of DCP is conducted, and no problem is confirmed by an operator (S06, Yes), RIP-processed data (which are the same as data used in outputting DCP) are transmitted to CTP6 by the RIP 4 for CTP, and the CTP 6 conducts image recording directly on a printing plate (S07). Further, printing is conducted using the printing plate, and imposed images representing a printed matter are subjected to color proofing. If no problem is confirmed in this case by an operator (S08, Yes), the process flow advances to the process where final printed matters are printed by the printing machine (S09).

### (Color laser printer)

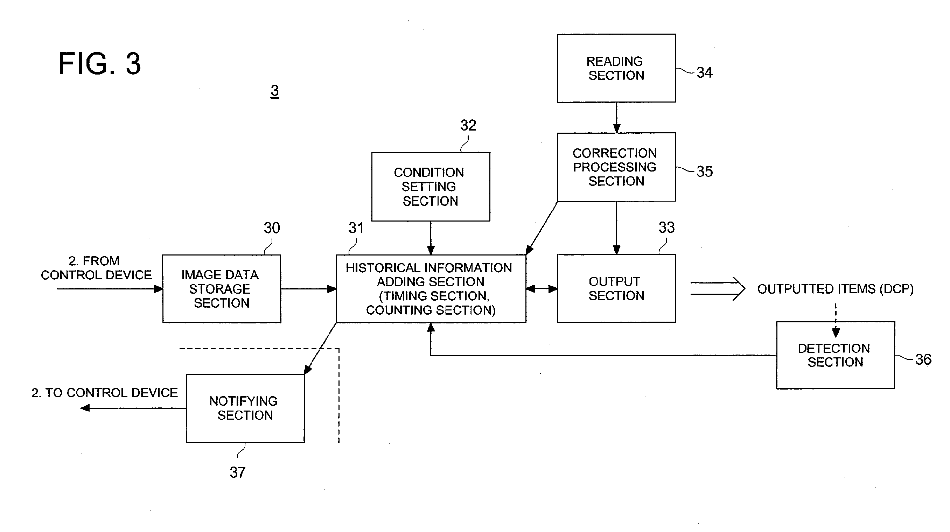

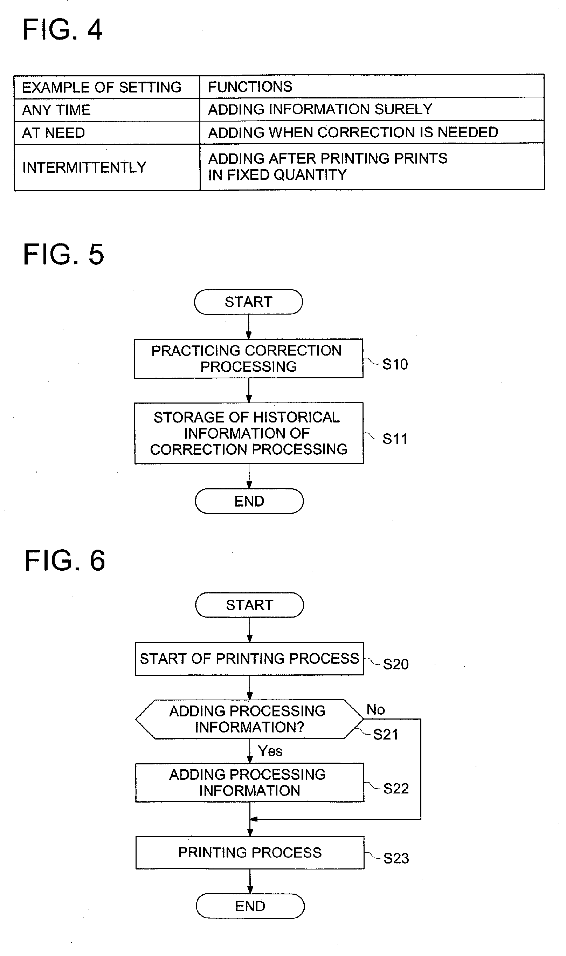

Next, detailed structures and detailed operations of color laser printer 3 representing an image output device that constitutes the color proof preparing system will be explained, following the flow of the flow chart shown in each of Figs. 5 and 6, while referring to Figs. 3, 4 and 7. Incidentally, there will be explained as follows the processing to inform the timing of conducting correction processing in the color laser printer 3 by providing hysteretic information to output images, which is a distinctive part of the invention, taking an example of the occasion to output images based on image data for final output transmitted from RIP 4 for CTP.

### (Detailed structure)

As shown in Fig. 3, color laser printer 3 is composed of image data storage section 30 to store image data received from control device 2, hysteretic information providing section 31 that prepares hysteretic information concerning correction processing such as registration adjustment and gamma correction conducted in the printer 3, and conducts processing (hereinafter referred to as hysteretic information providing processing) to provide hysteretic information relating to the correction processing to the image data stored in the image data storage section 30, condition setting section 32 that sets the point in time (for example, the moment when a prescribed period of time has passed, or the moment when the number of times of output arrives at the prescribed value) for the hysteretic information providing section 31 to conduct the hysteretic information providing processing, output section 33 that outputs to a transfer sheet the images based on the image data to which the hysteretic information concerning correction processing has been provided by the hysteretic information providing section 31, reading section 34 that reads various types of color charts (a color chart for adjusting registration described later and a color chart for gamma correction) outputted from the output section 33, correction processing section 35 that conducts correction processing such as registration adjustment and gamma correction, based on results of reading of various types of color charts which are read by the reading section 34, and further of detection section 36 that measures density of images outputted by the output section 33, then, checks whether or not the image quality of the image is deteriorated, based on a difference between the measured density value and the prescribed value, and urges the hysteretic information providing section 31 to conduct hysteretic information providing processing when the deterioration of the image quality is detected.

In the present embodiment, color laser printer 3 of an electrophotographic type serves as an image output device, and therefore, a scanner, namely, the reading section 34 which is usually provided on the printer of that type serves as "detection means to detect the conditions of images" mentioned in the invention. When the scanner is not provided, it is also possible to make the detection section 36 to function as the "detection means to detect the conditions of images", and such conditions will be described later.

Incidentally, the image data storage section 30 is composed of a storage means such as a memory. Further, the hysteretic information providing section 31 is composed of an operation means such as CPU and of a storage means (hereinafter referred to as a storage section) that stores hysteretic information concerning a prescribed processing program and correction processing (in addition, a timing section and a calculating section of the hysteretic information providing section 31 are composed of timers). The condition setting section 32 is composed of an operating means such as a key board and a mouse and of a storage means that stores the established conditions (hereinafter referred to as a storage section). The output section 33 is composed of an image carrier (photoreceptor drum) on which a latent image and a toner image both for each color are formed, a charging unit that conducts charging on the photoreceptor drum, a writing unit that irradiates a laser beam on the charged photoreceptor drum to give exposure therein to form a latent image, a developing unit that conducts developing to visualize the formed latent image as a toner image, a transfer unit that transfers the toner image onto a transfer sheet, a fixing unit that fixes the toner image transferred onto the transfer sheet by heat and pressure and of conveyance rollers which convey the transfer sheet between constituents. Further, the reading section 34 is composed of an image reading means such as a scanner. The correction processing section 35 is composed of an operation means such as CPU and of a storage means for storing a prescribed processing program. The detection section 36 is composed of a detection means such as a CCD (Charge Coupled Device) camera and a density measuring instrument, an operation means such as CPU and of a storage means (hereinafter referred to as a storage section) that stores processing program concerning comparison processing and the prescribed value both described later. Incidentally, with respect to the detailed structure of the output section 33, it is the same as the conventional one, and an example thereof is represented, for example, by the image forming device described in TOKKAI No. 2002-116586 filed by the applicant of the present invention.

### (Detailed operations)

In the aforesaid structure, an operator first sets the point of time for the hysteretic information providing section 31 to conduct the hysteretic information providing processing with the condition setting section 32. To be concrete, the condition setting section 32 shows a setting screen for setting thereon the condition to conduct the hysteretic information providing processing on the display section (setting screen display step), wile, the operator sets the condition to determine the point in time to conduct the hysteretic information providing processing though operations by the condition setting section 32. Incidentally, the hysteretic information mentioned here includes specifically contents of correction processing such as registration adjustment and gamma correction, the previous date and hour or the total number of transfer sheets outputted in a period from the previous date and hour. Further, as an example of setting conditions for conducting the hysteretic information providing processing, there are some cases, as shown in Fig. 4, including an occasion at any time (where hysteretic information is added to outputted objects every time the output section 33 outputs), an occasion at need (where hysteretic information is added to outputted objects outputted by the output section 33 in the succeeding time, when deterioration of image quality of the outputted object is detected by the detection section 36) and an occasion at intermittently (where hysteretic information is added to outputted objects outputted by the output section 33 in the succeeding time, when the condition set by the condition setting section 32 arrives (when the total number of transfer sheets outputted from the output section 33 arrives at the prescribed number of sheets, in the same figure)). Incidentally, the condition set is stored in the storage section of the condition setting section 32 (condition storage step).

When conducting the correction processing such as registration adjustment and gamma correction after the foregoing (correction step), there is carried out the processing explained below.

First, when conducting registration adjustment, an operator operates the operating section first to output a color chart for registration adjustment from the output section 33. This color chart for correcting registration is specifically the one for outputting a register mark corresponding to each color constituting outputted images on each of four corners of a transfer sheet. The operator further conducts operations to read, with the reading section 34, positions of register marks for respective colors of the color chart, thus, the correction processing section 35 calculates an amount of displacement in color laser printer 3, and thereby, a position (position of writing by irradiation of a laser beam) for outputting each color is adjusted based on the amount of the displacement.

Incidentally, when the color laser printer 3 is not provided with the reading section 34, it may be possible to introduce an arrangement wherein, by utilizing that the standard output position of an image outputted on a transfer sheet by the output section 33 is stored on a storage portion of the detection section 36 in advance, the output position of the color chart for registration adjustment is detected by the detection section 36, comparison processing program is conducted by an operation means, and an mount of displacement for each color is calculated by comparing the results of the detection with the standard output position, and thereby, the output position for each color on the output section 33 is adjusted through the hysteretic information providing section 31, based on the amount of the displacement.

Next, when correcting gamma, an operator operates the operating section first to output a color chart for correcting gamma. This color chart for correcting gamma is specifically the one for outputting each color on a multi-density level basis while changing laser output stepwise on the output section 33. The operator conducts operations to read, with the reading section 34, the density values of each color of the color chart, thus, the correction processing section 35 calculates density values [an amount of displacement] in color laser printer 3, and thereby, based on the difference between the density value and the prescribed value, laser output is adjusted so that an amount of exposure that makes the density value for each color to be the same as the prescribed value may be obtained. Incidentally, this gamma value is one to be determined by the curve of gradation characteristics expressing relationship between laser output in the output section 33 and density of outputted color, and the aforesaid gamma correction is one that is stored in the storage section of the correction processing section 35 and adjusts so that each of a position and an inclination of the curve of gradation characteristics may be aligned for the density value and the prescribed value.

On the other hand, in the output section 33, output processing of image data is conducted after the positions for images (latent images) for respective colors to be formed on the photoreceptor drum are adjusted under the correction processing in the correction processing section 35, and laser output of the writing unit is adjusted following the corrected gamma curve.

Incidentally, when the color laser printer 3 is not provided with the reading section 34, it may be possible to introduce an arrangement wherein, by utilizing that the prescribed value of density (the permissible limit value of errors) of an image outputted on a transfer sheet by the output section 33 is stored on a storage portion of the detection section 36 in advance, the density value of each color of the color chart for gamma correction is detected by the detection section 36, comparison processing program is conducted by an operation means, and an mount of displacement of gradation characteristics for each color is calculated by comparing the results of the detection with the prescribed value of density, and thereby, the laser output is adjusted based on the amount of displacement on the output section 33 through the hysteretic information providing section 31, so that an amount of exposure that makes the density value to be the prescribed value may be obtained.

Incidentally, as shown in Fig. 5, when correction processing is conducted by the correction processing section 35 (correction step; S10), the type of the correction processing is notified to the hysteretic information providing section 31 as occasion calls, and in the hysteretic information providing section 31, the date and hour of the correction processing are recorded by the timing section, and these are to be updated and stored in the storage section (recording step, hysteretic information storing step; S11). Further, thereafter, each time the output processing of image data is conducted by the output section 33, namely, each time the image data stored in the image data storage section 30 are outputted to the output section 33, the number of times of the image data output processing (= the number of sheets of outputted objects outputted from the output section 33) is counted by the calculating section, in the hysteretic information providing section 31, and the total number of the output is to be recorded in the storage section (recording step, hysteretic information storing step; S11).

Then, as shown in Fig. 6, when the image output processing is started, namely, when the image data are transmitted from the control device 2 to be stored in the image data storage section 30 (S20), the hysteretic information providing section 31 compares the conditions stored in the storage section of condition setting section 32 with the results of timing (date and hour of the previous correction processing) by the timing section and the results of counting (the number of sheets of outputted objects outputted by the output section 33 after the previous correction processing) by the calculating section both stored in the storage section of the hysteretic information providing section 31. When the conditions set in the condition setting section 32 are satisfied (S21, Yes), the processing to add hysteretic information to image data stored in the image data storage section 30 is conducted (information adding step; S22), every time the output section 33 outputs when "an occasion at any time" is established, in the case where deterioration of image quality of outputted objects is detected by the detection section 36 (detection step) when "an occasion at need" is established, and in the case where the period set by the condition setting section 32 has elapsed when "an occasion at intermittently" is established. Receiving the foregoing, the output section 33 outputs images based on the image data to which the hysteretic information is added (S23).

As stated above, an standard output position and a prescribed value of density (the permissible limit value of errors) of images to be outputted on a transfer sheet by the output section 33 are stored in the storage section of the detection section 36 in advance (prescribed value storing step), and the detection section 36 detects the output position and density of the image outputted on a transfer sheet by the output section 33, and detects deterioration of image quality of the outputted objects by comparing the results of the detection with the prescribed value (comparing step). Namely, when the output position of the image outputted on a transfer sheet by the output section 33 is shifted from the standard output position, and when density thereof is deviated from the prescribed value (the permissible limit value of errors is exceeded), deterioration of image quality of outputted objects is detected.

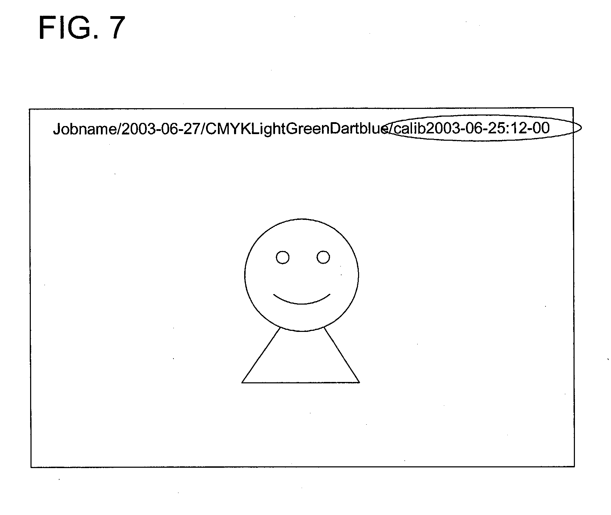

As a result, hysteretic information for correction processing is outputted in addition to images on the outputted objects outputted by the output section 33, as shown in Fig. 7. Incidentally, in the same figure, there is outputted hysteretic information of "calib2003 - 06 - 25 : 12 - 00" which means that the content of the previous correction processing was calib (= gamma correction), and this gamma correction was carried out at noon on June 25^{th}, 2003. In addition to this, if the content of the previous correction processing was registration adjustment, it is also possible to display "regist" or to display the number of sheets of outputted objects outputted by the output section 33 after the previous correction processing.

As explained above, in the color proof preparing system, in the case of outputting DCP representing color samples for proofing, when an operator sets a condition to determine the point in time for adding hysteretic information about correction processing to outputted objects in the condition setting section 32 in advance, in the color laser printer 3, the condition is referred each time the hysteretic information providing section 31 conducts image output processing, and when this is satisfied, the processing to add the hysteretic information to image data to be outputted next time is conducted, and the output section 33 outputs the image based on the image data to which the hysteretic information is added, thus, the operator can judge properly the timing to conduct the correction processing next time to conduct it, by referring to the hysteretic information outputted to the outputted objects.

In the color proof preparing system in the present embodiment, an operator can conduct correction processing at the appropriate timing in the color laser printer 3, as stated above. It is therefore possible to utilize, on a full scale, the color laser printer 3 wherein an apparatus cost and a running cost are inexpensive and high speed outputting can be performed, as a means to make a color proof, which results in a reduction of the apparatus cost.

Incidentally, the program to carry out the processing conducted in the color laser printer 3 representing an image output device that constitutes the color proof preparing system, specifically, the processing explained in the aforesaid (Detailed operations) while referring to S10 - S11 of the flow chart in Fig. 5 and S20 - S23 of the flow chart in Fig. 6 is housed in the color laser printer 3 or stored in a storage medium to be connected, and the program is read by an operation section housed in the same color laser printer 3 to be carried out.

As a specific example of the storage medium, there are given a semiconductor memory such as, for example, ROM, RAM and flash memory, memory device such as an integrated circuit, an optical disc, a magneto-optical disc (CD-ROM / DVD-RAM / DVD-ROM / MO), and magnetic storage medium <magnetic disc> (hard disc / floppy (registered trademark) disc / ZIP).

Incidentally, the color proof preparing system, the image output device and the color proof preparing method in the present embodiment are those wherein preferred embodiments of the invention are exemplified, and other embodiments are not excluded.

For example, it is also possible to arrange so that notifying section 38 that notifies hysteretic information to be added in the hysteretic information providing section 31 to the control device 2 may be provided on the color laser printer 3 (see the area surrounded by dotted lines in Fig. 3), and the hysteretic information is displayed on the display section after being received on the part of the control device 2. Due to this, when the control device 2 is away from the color laser printer 3, for example, and an operator is mainly at the place where the control device is installed, the operator can confirm the hysteretic information of the color laser printer 3 at the control device 2.

Further, when the color laser printer 3 is the so-called general purpose printer which is provided with neither hysteretic information adding section 31 nor condition setting section 32, these functions may be provided on the control device 2. In this case, for example, the hysteretic information adding section of the control device 2 obtains hysteretic information relating to correction processing from the correction processing section 35 of the color laser printer 3, and the processing to add the hysteretic information to the image data to be transmitted to the color laser printer 3 is conducted. On the part of the operator, conditions for adding the hysteretic information are set by the condition setting section of the control device 2. Or, the processing that the hysteretic information adding section of the control device 2 adds the hysteretic information to image data to be transmitted to the color laser printer 3 may be conducted, when an operator inputs hysteretic information stored in the storage section of the color laser printer 3 on the inputting section provided on the control device 2, more accurately, on the image area displayed by the inputting section. In this case, on the part of the operator, conditions for adding the hysteretic information are set by the condition setting section of the control device 2.

Further, as the correction processing conducted in the color laser printer, the correction processing to correct, for example, charging, developing bias and the speed of rotation of a developing roller may also be conducted, in addition to registration adjustment and gamma correction.

Furthermore, as the image output device, color proof (DCP) preparing device 7, for example, may also be used, in addition to the color laser printer 3. Even in this case, images based on the image data are formed, through exposure and developing, on a recording sheet made of sensitized materials, and the recording sheet on which the images are formed is outputted as a color proof, therefore, at least registration adjustment and gamma correction are included in the correction processing conducted in the aforesaid device 7.

## Claims

1. A color proof preparing system comprising:
a control device that transmits image data corresponding to images to be subjected to color proofing;
an image output device that receives the image data and forms the image based on the image data on a recording sheet to output the recording sheet on which the image is formed, as a color proof; wherein,
the image output device comprising
a detection means that detects the state of the image,
a correcting means that conducts correction processing to correct the state of the image to be formed, based on the aforesaid detected state of the image,
a recording means that records the contents of the correction processing and the date and hour on which the correction processing was conducted,
a hysteretic information storage means that stores the contents of the recorded correction processing and the date and hour on which the correction processing was conducted, and
a hysteretic information adding means that conducts processing to add the stored hysteretic information to the image formed on a recording sheet.

2. A color proof preparing system comprising:
a control device that transmits image data corresponding to images to be subjected to color proofing;
an image output device that receives the image data and forms the image based on the image data on a recording sheet to output the recording sheet on which the image is formed, as a color proof; wherein,
the image output device comprising
a detection means that detects the state of the image,
a correcting means that conducts correction processing to correct the state of the image to be formed, based on the aforesaid detected state of the image,
a recording means that records the contents of the correction processing and the number of recording sheets outputted after the correction processing was conducted,
a hysteretic information storage means that stores the contents of the recorded correction processing and the number of recording sheets outputted after the correction processing was conducted, and
a hysteretic information adding means that conducts processing to add the recorded hysteretic information to the image formed on the recording sheet.

3. A color proof preparing system comprising:
a control device that transmits image data corresponding to images to be subjected to color proofing;
an image output device that receives the image data and forms the image based on the image data on a recording sheet to output the recording sheet on which the image is formed, as a color proof; wherein,
the image output device comprising,
a detection means that detects the state of the image,
a correcting means that conducts correction processing to correct the state of the image to be formed, based on the aforesaid detected state of the image, and
a recording means that records the contents of the correction processing and the date and hour on which the correction processing was conducted, and
the control device comprising
a hysteretic information adding means that conducts processing to add the hysteretic information to images formed on a recording sheet by receiving the transmitted hysteretic information and by adding the hysteretic information to the image data, and transmits the processed image data as the aforesaid image data.

4. A color proof preparing system comprising:
a control device that transmits image data corresponding to images to be subjected to color proofing;
an image output device that receives the image data and forms the image based on the image data on a recording sheet to output the recording sheet on which the image is formed, as a color proof; wherein,
the image output device comprising
a detection means that detects the state of the image,
a correcting means that conducts correction processing to correct the state of the image to be formed, based on the aforesaid detected state of the image, and
a recording means that records the contents of the correction processing and the number of recording sheets outputted after the correction processing was conducted and transmits the recorded contents of the correction processing and the number of recording sheets outputted after the correction processing was conducted as the hysteretic information, and
the control device comprising
a hysteretic information adding means that conducts processing to add the hysteretic information to images formed on a recording sheet by receiving the transmitted hysteretic information and by adding the hysteretic information to the image data, and transmits the processed image data as the aforesaid image data.

5. The color proof preparing system according to any one of Claims 1 - 4, wherein,
the detection means detects the position where the image is formed and/or density of the image, as a state of the image, while the correcting means conducts the correction processing for correcting the image-formed position based on the detected position where the image is formed, and/or the correction processing for correcting an amount of exposure in the case of forming an image, based on the detected density of the image.

6. The color proof preparing system according to Claims 5, wherein,
the image output device comprising
a prescribed value storing means that stores a standard forming position of an image and/or a prescribed value of image density,
a comparing means that compares the detected forming position of the image with the stored standard forming position and/or compares density of the image with a prescribed value of the stored density,
a condition setting means to set each point in time for forming an image on a recording sheet or each time after forming prescribed number, as the point in time for adding the hysteretic information to the image formed on the recording sheet, or to set either one of the occasion where the position of forming the image is deviated from the stored standard forming position and/or the occasion where the density of the image is deviated from the stored prescribed value of density, both in the aforesaid comparison, and
a condition storage means that stores the established condition, and
the hysteretic information adding means conducts processing to add the hysteretic information to the image formed on the recording sheet, depending on the condition, by referring to the condition stored before the image is formed on the recording sheet.

7. The color proof preparing system according to Claims 5, wherein,
the image output device comprising
a prescribed value storing means that stores a standard forming position of an image and/or a prescribed value of image density,
a comparing means that compares the detected image forming position with the stored standard forming position and/or compares density of the image with the stored prescribed value of density, and
the hysteretic information adding means conducts the processing for adding the hysteretic information to an image formed on a recording sheet, when the position of forming the image is deviated from the stored standard forming position and/or when the density of the image is deviated from the stored prescribed value of density, both in the aforesaid comparison.

8. The color proof preparing system according to Claims 1 or Claims 2, wherein,
the image output device is provided with a notifying means that notifies the stored hysteretic information to the control device, and
the control device is provided with a display means that displays notified hysteretic information.

9. The color proof preparing system according to Claims 3 or Claims 4, wherein,
the control device is provided with a display means that displays the transmitted hysteretic information.

10. An image output device that receives image data corresponding to the image to be subjected to color proofing to form an image based on the image data on a recording sheet, and outputs the recording sheet on which the aforesaid image has been formed as a color proof, comprising:
a detection means that detects the state of the image,
a correcting means that conducts correction processing to correct the state of the image formed based on the detected state of image,
a recording means that records contents of the correction processing and the date and hour on which the correction processing was conducted,
a hysteretic information storage means that stores, as the hysteretic information, the recorded contents of the correction processing and the date and hour on which the correction processing was conducted, and
a hysteretic information adding means that conducts processing to add the stored hysteretic information to the image formed on the recording sheet.

11. An image output device that receives image data corresponding to the image to be subjected to color proofing to form an image based on the image data on a recording sheet, and outputs the recording sheet on which the aforesaid image has been formed as a color proof, comprising:
a detection means that detects the state of the image,
a correcting means that conducts correction processing to correct the state of the image formed based on the detected state of image,
a recording means that records contents of the correction processing and the number of recording sheets outputted after the correction processing was conducted,
a hysteretic information storage means that stores, as the hysteretic information, the recorded contents of the correction processing and the number of recording sheets outputted after the correction processing was conducted, and
a hysteretic information adding means that conducts processing to add the stored hysteretic information to the image formed on the recording sheet.

12. The image output device according to Claim 10 or Claim 11, wherein,
the detection means detects the forming position and/or density of the image as the state of the image, and
the correcting means conducts correction processing to correct the forming position of the image based on the detected forming position of the image as the aforesaid correction processing and/or correction processing to correct an amount of exposure in the case of forming an image based on the detected image density.

13. The image output device according to Claim 12, comprising:
a prescribed value storing means that stores a standard forming position of an image and/or a prescribed value of image density,
a comparing means that compares the detected forming position of the image with the stored standard forming position and/or compares density of the image with a prescribed value of the stored density,
a condition setting means to set each point in time for forming an image on a recording sheet or each time after forming prescribed number, as the point in time for adding the hysteretic information to the image formed on the recording sheet, or to set either one of the occasion where the position of forming the image is deviated from the stored standard forming position and/or the occasion where the density of the image is deviated from the stored prescribed value of density, both in the aforesaid comparison, and
a condition storage means that stores the established condition, wherein,
the hysteretic information adding means conducts processing to add the hysteretic information to the image formed on the recording sheet, depending on the condition, by referring to the condition stored before the image is formed on the recording sheet.

14. The image output device according to Claim 10 or Claim 11, comprising:
a prescribed value storing means that stores a standard forming position of an image and/or a prescribed value of image density and
a comparing means that compares the detected forming position of the image with the stored standard forming position and/or compares density of the image with a prescribed value of the stored density, wherein,
the hysteretic information adding means conducts processing to add the hysteretic information to the image formed on the recording sheet when the forming position of the image is deviated from the stored standard forming position and/or when density of the image is deviated from the stored prescribed value of density.

15. The image output device according to Claim 10 or Claim11, that is represented by a color laser printer wherein a latent image based on the image data is formed on an image carrier through laser exposure, then, the formed latent image is developed, the developed image is transferred onto a recording sheet, the transferred image is fixed, then, a recording sheet on which the image is fixed is outputted as the color proof, or by a color proof preparing device wherein an image based on the image data is formed on a recording sheet made of sensitized materials, and the recording sheet on which the images are formed is outputted as a color proof.

16. A color proof preparing method for forming an image based on the image data corresponding on the image to be subjected to color proofing on a recording sheet, through exposure process and for outputting the recording sheet on which the image is formed as a color proof, comprising:
a detecting step to detect the state of the image, a correcting step for conducting correction processing to correct the state of the image formed based on the detected state of the image,
a recording step to record the contents of the correction processing and the date and hour on which the correction processing was conducted,
a hysteretic information storing step for storing the recorded contents of the correction processing and the date and hour on which the correction processing was conducted, and
a hysteretic information adding step to conduct processing for adding the stored hysteretic information to the image formed on the recording sheet.

17. A color proof preparing method for forming an image based on the image data corresponding on the image to be subjected to color proofing on a recording sheet, through exposure process and for outputting the recording sheet on which the image is formed as a color proof, comprising:
a detecting step to detect the state of the image,
a correcting step for conducting correction processing to correct the state of the image formed based on the detected state of the image,
a recording step to record the contents of the correction processing and the number of recording sheets outputted after the correction processing was conducted,
a hysteretic information storing step for storing the recorded contents of the correction processing and the number of recording sheets outputted after the correction processing was conducted, and
a hysteretic information adding step to conduct processing for adding the stored hysteretic information to the image formed on the recording sheet.

18. The color proof preparing method according to Claim 16 or Claim 17, wherein,
in the detecting step, the forming position and/or density of the image is detected as the state of the image, and
in the correcting step, correction processing to correct the forming position of the image based on the detected forming position of the image and/or correction processing to correct an amount of exposure in the case of forming an image based on the detected image density is conducted, as the correction processing.

19. The color proof preparing method according to Claim 18, further comprising:
a prescribed value storing step that stores a prescribed value of the standard forming position of the image and/or of the image density,
a comparing step to compare the detected forming position of the image with the stored standard forming position and/or to compare the image density with the prescribed value of the stored density,
an established image area displaying step to display the established image area to set each point in time for forming an image on a recording sheet or each time after forming prescribed number, as the point in time for adding the hysteretic information to the image formed on the recording sheet, or to set either one of the occasion where the position of forming the image is deviated from the stored standard forming position and/or the occasion where the density of the image is deviated from the stored prescribed value of density, both in the aforesaid comparison, and
a condition storing step to store the condition established on the established image area, wherein,
in the hysteretic information adding step, there is conducted processing to add the hysteretic information to the image formed on the recording sheet according to the condition, by referring to the condition stored before the image is formed on the recording sheet.

20. The color proof preparing method according to Claim 16 or Claim 17, further comprising:
a prescribed value storing step to store the standard forming position of the image or the prescribed value of density of the image and
a comparing step that compares the detected forming position of the image with the stored standard forming position and/or compares the density of the image with the prescribed value of the stored density, and
in the hysteretic information adding step, the processing to add the hysteretic information to the image formed on the recording sheet is conducted when the forming position of the image is deviated from the stored standard forming position in the aforesaid comparison, and/or when the image density is deviated from the stored prescribed value.
